Europäisches Patentamt

European Patent Office

Office européen des brevets

(11) Numéro de publication: **0 271 624 B1**

## FASCICULE DE BREVET EUROPEEN

(45) Date de publication de fascicule du brevet: **16.09.92**  (51) Int. Cl.5: **G06F 15/22**, G06K 17/00

(21) Numéro de dépôt: **86402842.8**

(22) Date de dépôt: **17.12.86**

(54) **Procédé pour établir une facture de différents produits.**

(43) Date de publication de la demande:
**22.06.88 Bulletin 88/25**

(45) Mention de la délivrance du brevet:
**16.09.92 Bulletin 92/38**

(84) Etats contractants désignés:
**BE CH DE ES GB IT LI NL SE**

(56) Documents cités:
**DE-A- 2 338 773**

**IBM TECHNICAL DISCLOSURE BULLETIN, vol. 19, no. 5, October 1976, page 1828, New York, US; P.C. FUROIS et al.: "Portable inventory system and method"**

**PATENT ABSTRACTS OF JAPAN, vol. 6, no. 53 (P-109)[931], 8th April 1982; & JP-A-56 168 281 (SONY K.K.) 24-12-1981**

(73) Titulaire: **Tourette, André**
**9 rue Vivaldi**
**F-95370 Montigny lès Cormeilles(FR)**

(72) Inventeur: **Tourette, André**
**9 rue Vivaldi**
**F-95370 Montigny lès Cormeilles(FR)**

(74) Mandataire: **Flavenot, Bernard**
**Société ABRITT 17, rue du Docteur Charcot**
**La Norville**
**F-91290 Arpajon(FR)**

**Description**

La présente invention concerne les procédés pour l'établissement de la facture de différents produits offerts à la vente, qu'ils soient de service ou matériels tels que, par exemple, des produits pharmaceutiques délivrés selon une ordonnance établie, par exemple, par un médecin.

Actuellement, quand une personne consulte un médecin et que ce dernier établit une ordonnance, elle doit se présenter à l'officine de pharmacie pour se procurer les médicaments qui lui ont été prescrits.

Le pharmacien lit l'ordonnance et va chercher les médicaments en qualité et en quantité ordonnés. Chacun de ces médicaments comporte une étiquette qui porte le nom et le prix. Alors, le pharmacien peut établir sans difficulté la facturation en sommant l'ensemble des prix indiqués. Ceci pourrait paraître relativement facile, et sécurisant pour le malade. Cependant, on sait que le nombre des médicaments est de plus en plus croissant et que les pharmaciens se font de plus en plus seconder par des laborantins ou des aides pharmaciens qui risquent, malgré tout, de ne pas avoir toute la compétence nécessaire pour gérer parfaitement la distribution des médicaments. De plus, les pharmaciens eux-mêmes peuvent ne pas arriver à suivre l'évolution de tous ces médicaments, et il en est de même, d'ailleurs, pour les médecins.

Ceci fait qu'il peut arriver, par exemple, qu'un médecin prescrive deux ou plusieurs médicaments incompatibles entre eux et que le deuxième filtre dont le pharmacien joue le rôle n'arrive plus à assurer la sécurité voulue. Il devient donc de plus en plus difficile de bien gérer et facturer la prestation de fourniture de médicaments à un malade.

Ce problème de la facturation se présente sous différentes formes dans de nombreux domaines, tel que le lavage industriel du linge de plusieurs collectivités.

Pour tenter de résoudre ce problème, des procédés ont été mis au point, notamment comme ceux qui sont décrits dans les EP-A-0 194 167 et DE-A-23 38 773. Plus particulièrement, dans le premier document cité, le procédé décrit consiste à codifier chaque produit suivant un code, codifier des paramètres de facturation sur un support, ces paramètres étant codifiés suivant le même code que les produits, lire avec un même lecteur les codes des produits vendus et les codes des paramètres souhaités sur le support, pour les mettre en mémoire, lire et traiter le contenu des mémoires, et à transformer les signaux obtenus après le traitement en des informations à mémoire permanente.

Ce procédé présente cependant des inconvénients que la présente invention a pour but de pallier.

Plus précisément, la présente invention a pour objet un procédé d'établissement d'une facture pour la prestation de la fourniture de produits de service ou matériels consistant à :
- codifier chaque produit suivant un code donné, ledit code étant réalisé par un code à barres de référence,
- codifier des paramètres de facturation desdits produits, cesdits paramètres étant codifiés suivant le même dit code donné, sur un support transportable,
- lire les codes desdits produits fournis, avec un lecteur de codes, ledit lecteur ayant des mémoires pour mémoriser lesdits codes,
- lire les codes des paramètres souhaités sur ledit support, avec ledit même lecteur et à mémoriser cesdits codes dans les mémoires dudit lecteur,
- lire et traiter le contenu desdites mémoires dudit lecteur par une unité de traitement apte à délivrer des signaux de commande fonctions dudit contenu desdites mémoires, et à
- transformer lesdits signaux de commande délivrés par ladite unité de traitement en des informations à mémoire permanente du type impression sur papier,

CARACTERISE PAR LE FAIT QUE la codification des paramètres comporte au moins une codification permettant de vider le contenu desdites mémoires dudit lecteur de codes.

En comparaison avec le lecteur de codes connu du second document cité, le lecteur de codes de l'invention ne nécessite pas une touche spécialisée pour annuler des informations lues par erreur.

D'autres caractéristiques et avantages de la présente invention apparaîtront au cours de la description suivante donnée en regard des dessins annexés à titre illustratif mais nullement limitatif, dans lesquels :

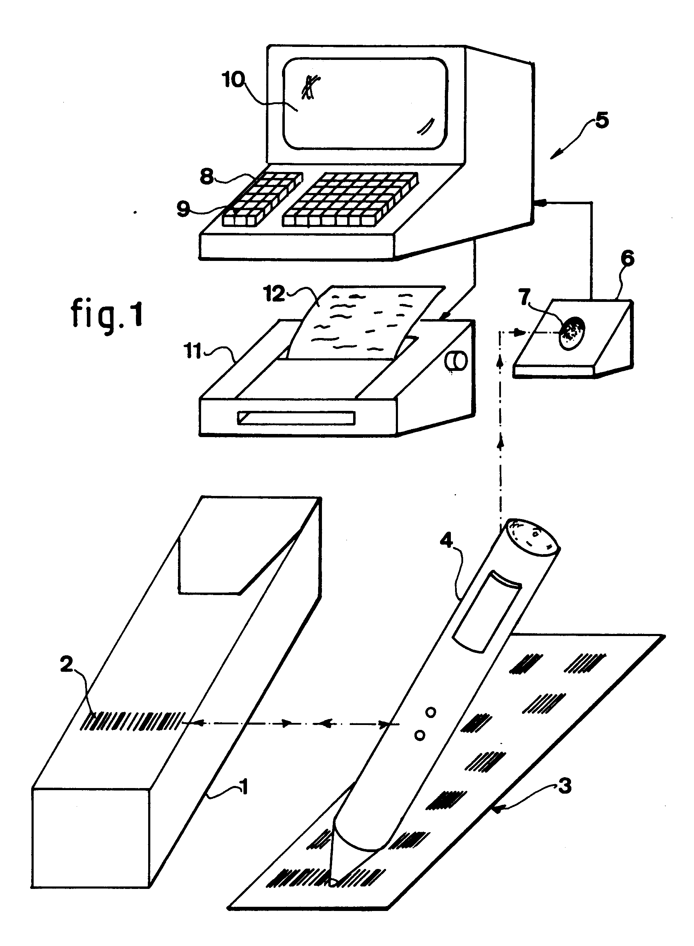

- les FIGURES 1, 2 et 3 représentent un ensemble de moyens permettant de mettre en oeuvre le procédé, selon l'invention, d'établissement d'une facture dans l'exemple de la fourniture de médicaments suite à la délivrance d'une ordonnance.

L'ensemble des trois FIGURES représente les mêmes moyens dans différentes vues ou portions de vues. En conséquence, les mêmes références y désignent les mêmes éléments.

Comme il a été mentionné ci-dessus, le procédé selon l'invention est décrit ci-après dans l'exemple de l'établissement d'une facture de produits pharmaceutiques ou médicaments prescrits par un médecin sur la base d'une ordonnance.

Dans le cadre de ce procédé, tous les médicaments qui seront distribués dans les officines de pharmacie sont codés suivant un code donné, dit "de référence", par exemple sur le conditionnement 1, pour représenter, par exemple, leur nom et leur prix, ceux-ci pouvant être, bien entendu, donnés en clair à côté de ce code. Le code choisi doit être parfaitement déterminé et il sera avantageusement du type "code à barres" 2 avec une normalisation connue par les hommes de l'Art en la matière.

De plus, chaque vendeur dans l'officine qui sera chargé de délivrer ces médicaments suite à la prescription d'une ordonnance aura à sa disposition un support matériel 3 du type carte plastifiée. Sur ce support matériel 3, il sera, préalablement et de façon durable, codifié des paramètres et, ce qui est très important, ces paramètres sont codés suivant la même clé de code que celle utilisée pour la réalisation du code 2 situé sur le conditionnement 1 du médicament.

Bien entendu, une pluralité de paramètres sont possibles, avec, éventuellement, le prix du médicament, si celui-ci n'a pas été codé sur son conditionnement.

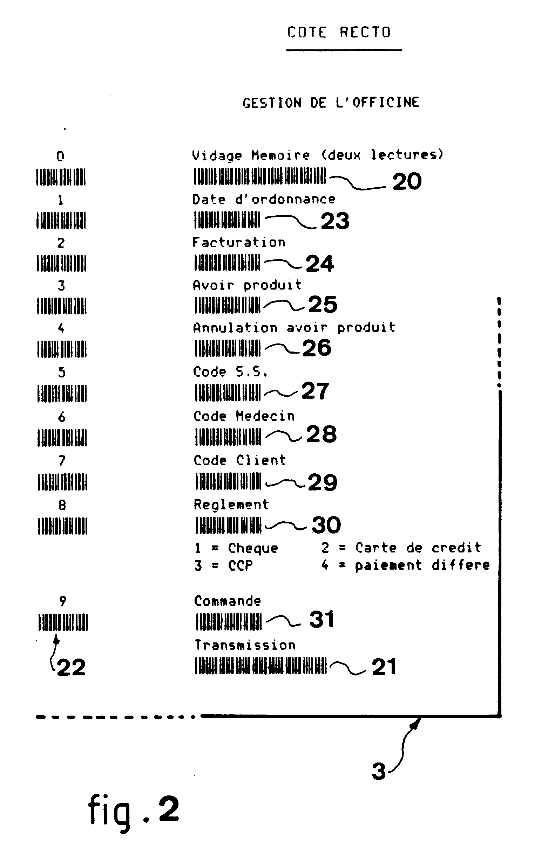

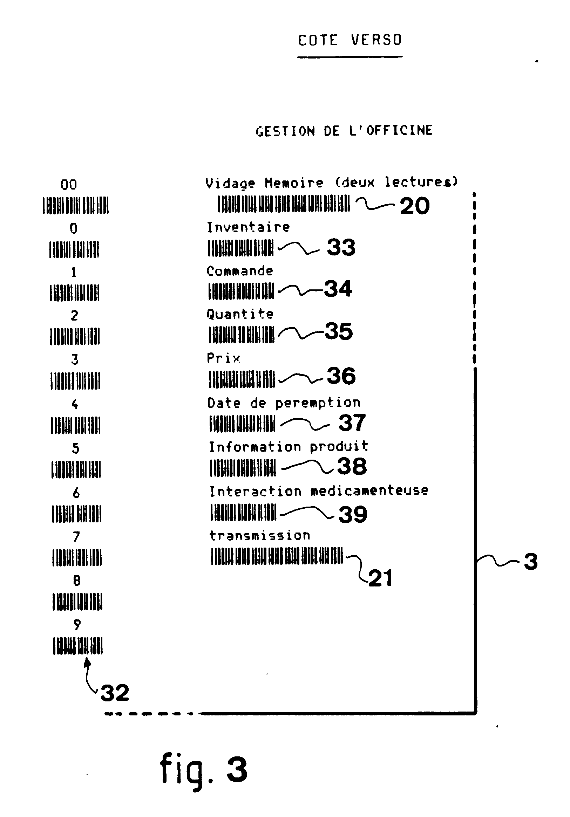

Un exemple concret de réalisation d'un tel codage est illustré sur les FIGURE 2 et 3 qui représentent un ensemble de codes respectivement côté recto et côté verso de la carte support 3 illustrée en perspective sur la FIGURE 1. A côté de chaque code, pour une facilité d'utilisation, il est mentionné sa signification, pour permettre au vendeur de les utiliser sans erreur.

Quand une personne se présente à l'officine avec une ordonnance, le vendeur sort les médicaments prescrits. Il possède sur lui le support 3 et un lecteur de code 4, le lecteur ayant des unités de mémoire pour mémoriser les codes qu'il sera amené à lire, soit sur les médicaments (ou leur conditionnement 1), soit sur sa carte personnelle 3. Ce lecteur de code 4 est avantageusement du type connu de crayon lecteur optique de code à barres.

Quand le vendeur a sorti les médicaments, après avoir eu soin de vider le contenu des mémoires de son lecteur, il lit, avec ce lecteur, les codes des médicaments ordonnés qu'il a sortis, ces codes étant alors mémorisés dans les mémoires du lecteur. Ensuite, il lit, toujours avec le même lecteur contenant les informations codées lues précédemment, les différents paramètres qui sont nécessaires, en fonction des différents critères de fontionnement de l'officine, de gestion des médicaments, de vérification de la compatibilité des médicaments entre eux, etc...

Quand l'ensemble de ces informations est mémorisé, le vendeur place son lecteur en association avec une unité de traitement 5 comportant un interface 6 constitué par un boîtier-réceptacle 7 dans lequel il est possible de placer le lecteur 4, cet interface 6 étant capable de transférer dans l'unité centrale de traitement 8, du type micro-ordinateur à clavier 9 et visualisation 10, l'ensemble des informations qui étaient contenues dans le lecteur 4.

Ces informations sont traitées suivant un programme, et éventuellement associées à d'autres informations qui peuvent être introduites au clavier 9, comme par exemple le nom et l'adresse du client, etc ...

Quand ces informations sont correctes et confirmées, après les avoir, par exemple, visualisées sur l'écran 10, elles sont imprimées sur papier 12, en clair et de façon permanente, au moyen d'une imprimante 11 qui sort donc la facture directement.

Ce procédé facilite manifestement les opérations de délivrance et distribution des médicaments. Mais en plus, il sécurise les clients, car il est possible, avec l'unité de traitement, de pouvoir vérifier automatiquement, et pour tous les médicaments, leur compatibilité entre eux, ce qui était presque impossible avec la simple mémoire des pharmaciens.

Afin de bien préciser les différents paramètres mentionnés ci-dessus, les FIGURES 2 et 3 représentent un mode de réalisation du support 3, avec les ensembles de codes respectivement côté recto et côté verso de cette carte 3 illustrée en perspective sur la FIGURE 1.

A titre d'exemple, la FIGURE 2 représente le côté recto du support 3 qui comprend les paramètres suivants et leur code :
- "VIDAGE MEMOIRE" 20 qui est utilisé pour vider la mémoire du crayon lecteur de codes à barres avant toute nouvelle saisie d'autres informations.
- "TRANSMISSION" 21 qui est utilisé pour transmettre les informations saisies par le crayon lecteur de codes à barres.
- "VALEUR" 22 dont les codes 0 à 9 servent à indiquer soit les valeurs 0 à 9 soit un complément d'informations pour un des codes fonctions définis ci-dessous. Pour indiquer des valeurs supérieures à 9, on exécute plusieurs lectures de codes à barres "VALEUR" :

```
exemple : Valeur  10      lire 1 et 0

           "      100       "   1, 0 et 0

          etc...
```

3

- "FONCTIONS" :

- DATE D'ORDONNANCE 23 qui est utilisé lorsque la date de l'ordonnance est différente de celle de la facturation faite par le pharmacien. Il est suivi par la lecture de plusieurs codes à barres "VALEUR" (de 2 à 6).
- FACTURATION 24 qui est utilisé chaque fois qu'un produit figure sur une ordonnance. Il faut tout d'abord lire un code à barres de référence; ensuite lire le code à barres "FACTURATION" et enfin un ou plusieurs code(s) à barres "VALEUR" 22, qui indique dans ce cas une quantité, et ce, pour chaque produit inscrit sur l'ordonnance. Remarque : pour tout produit qui ne fait pas l'objet d'une ordonnance, il suffit de lire un code à barres de référence et un ou plusieurs code(s) à barres "VALEUR" qui indique dans ce cas une quantité.
- AVOIR PRODUIT 25 qui est utilisé après la lecture d'un code à barres de référence, du code à barres "FACTURATION" 24, d'un ou plusieurs code(s) à barres "VALEUR" 22. Il faut lire le code à barres "AVOIR PRODUIT" et un ou plusieurs code(s) à barres "VALEUR".
- ANNULATION AVOIR PRODUIT 26 qui est utilisé seulement si un code à bares "AVOIR PRODUIT" a été lu et s'il est nécessaire de l'annuler. Il faut lire le code à barres de référence et le code à barres "ANNULATION AVOIR PRODUIT".
- S.S. (Sécurité Sociale) 27 qui est lu avant la lecture du No de Sécurité Sociale sous forme d'un code à barres d'un assuré.
- MEDECIN 28 qui est lu avant la lecture du No d'Identification sous forme d'un code à barres d'un médecin.
- CLIENT 29 qui est lu avant la lecture du No d'identification sous forme d'un code à barres d'un client de l'officine.
- REGLEMENT 30 qui est lu si le paiement n'est pas effectué en espèces. Ensuite, on lit un code à barres "VALEUR" de 1 à 4.
- COMMANDE 31 qui est utilisé, soit après la lecture d'un code à barres de référence, du code à barres "FACTURATION", d'un ou plusieurs code(s) à barres "VALEUR", soit après un code à barres de référence. Il est suivi de la lecture d'un à plusieurs code(s) à barres "VALEUR" 22.

Quant à la FIGURE 3, elle représente les paramètres qui peuvent être codés au verso de la carte 3. A titre d'exemple, le côté verso comprend les paramètres suivants avec leur code :
- "VIDAGE MEMOIRE" qui est identique au "VIDAGE MEMOIRE" 20 décrit pour le côté recto.
- "TRANSMISSION" qui est, lui aussi, identique au code "TRANSMISSION" 21 décrit pour le côté recto.
- "VALEUR" 32. Les codes 00 et 0 à 9 servent à indiquer les valeurs 00 et 0 à 9. Pour indiquer des valeurs supérieures, on exécute plusieurs lectures de codes à barres "VALEUR". (Voir code "VALEUR" pour le côté recto).

- "FONCTIONS" :

- INVENTAIRE 33 qui est lu lorsque l'inventaire total ou partiel est réalisé.
- COMMANDE 34 qui est utilisé après la lecture d'un code à barres INVENTAIRE et après la lecture d'un code à barres de référence. Il est suivi de la lecture d'un ou plusieurs code(s) à barres "VALEUR".
- QUANTITE 35 qui est utilisé après la lecture d'un code à barres PRIX et de plusieurs codes à barres "VALEUR". Il est suivi par la lecture d'un ou plusieurs code(s) à barres "VALEUR".
- PRIX 36 qui est utilisé si le prix de vente d'un produit livré est différent du prix du produit en stock. Il est suivi par la lecture de plusieurs codes à barres "VALEUR".
- DATE DE PEREMPTION 37 qui est utilisé pour les produits qui ont une date de péremption. Il est suivi par la lecture de plusieurs codes à barres "VALEUR.
- INFORMATION PRODUIT 38 qui est utilisé pour interroger un fichier produit. Il est précédé par la lecture d'un code à barres de référence.
- INTERACTION MEDICAMENTEUSE 39 qui est utilisé pour interroger le fichier Interaction Médicamenteuse. Il est précédé par la lecture d'un code à barres de référence.

Bien entendu, les fonctions et/ou paramètres mentionnés ci-dessus ne le sont qu'à titre illustratif, de même que leur signification. Ils peuvent être adaptés en fonction de nombreux critères qui peuvent être propres à chaque officine de pharmacie. Cependant, il est préférable que tous ces codes soient normalisés avec, bien entendu, un code de référence.

## Revendications

1. Procédé d'établissement d'une facture pour la prestation de la fourniture de produits de service ou matériels consistant à :
   - codifier chaque produite (1) suivant un code donné, ledit code (2) étant réalisé par un code à barres de référence,
   - codifier des paramètres de facturation desdits produits, cesdits paramètres étant codifiés suivant le même dit code donné, sur un support transportable (3),
   - lire les codes desdits produits fournis, avec un lecteur (4) de codes, ledit lecteur ayant des mémoires pour mémoriser lesdits codes,
   - lire les codes des paramètres souhaités sur ledit support, avec ledit même lecteur et à mémoriser cesdits codes dans les mémoires dudit lecteur,
   - lire et traiter le contenu desdites mémoires dudit lecteur par une unité (5) de traitement apte à délivrer des signaux de commande fonctions dudit contenu desdites mémoires, et à
   - transformer lesdits signaux de commande délivrés par ladite unité de traitement en des informations à mémoire permanente (12) du type impression sur papier,

   CARACTERISE PAR LE FAIT QUE la codification des paramètres comporte au moins une codification (20) permettant de vider le contenu desdites mémoires dudit lecteur de codes.

2. Procédé selon la revendication 1, CARACTERISE PAR LE FAIT QUE la codification des paramètres comporte au moins l'une des fonctions suivantes: transmission (21) des informations lues par le lecteur, élaboration d'informations représentant des valeurs (22, 32), des dates (23), des ordres de facturation (24), des avoirs financiers (25), des annulations d'avoirs (26), des numéros de références (27-29), la qualité des demandeurs (29), des modes de règlement (30), des commandes (31,34), des quantités (35), des prix (36), des dates de péremption (37) pour lesdits produits, des informations produits (38) et des interrogations d'interaction (39) entre lesdits produits.

## Claims

1. Method for making a bill for the providing with service or equipment products, consisting of :
   - coding every product (1) with a given code, said code (2) being realized with a reference bar code,
   - coding invoicing parameters for said products, said parameters being coded with said same given code, upon a carriable support (3),
   - reading the codes of said provided products with a code reader (4), with said code reader having memories for memorizing said codes,
   - reading, on said support, the codes of the parameters which are desired, with said same reader, and memorizing said codes into the memories of the reader,
   - reading and treating the contents of said memories of said reader with a treatment unit (5) able to deliver control signals in terms of said contents of said memories, and of :
   - changing said control signals which are delivered by said control unit into permanent memory informations (12) like printing on paper,

   CHARACTERIZED BY THE FACT THAT the coding of the parameters comprises at least a coding (20) which allows to clear out the contents of said memories of said code reader.

2. Method according to claim 1, CHARACTERIZED BY THE FACT THAT the coding of said parameters comprises at least one of the following functions : transmissions (21) of the informations which are read by the reader, elaborations of informations representing values (22, 32), dates (23), invoicing orders (24), financial credit sides (25), credit side annulments (26), reference numbers (27-29), qualification of the clients (29), methods of payment (30), orders (31, 34), quantities (35), prices (36), time-limitation dates (37) for said products, informations relative to said products (38) and questions relative to reciprocal actions (39) between said products.

## Patentansprüche

1. Verfahren zum Erstellen einer Rechnung für das Leisten einer Dienstleistung oder das Liefern von Erzeugnissen, bestehend aus:
   - Kodifizieren jeder Leistung (1) entsprechend einem gegebenen Kode (2), der durch einen Referenzstrichkode realisiert wird,

- Kodifizieren von Rechnungsparametern der Leistungen, welche Parameter gemäß demselben gegebenen Kode auf einem transportablen Support (3) kodifiziert werden,
- Lesen der Kodes der gelieferten Leistungen mit einem Kodeleser (4), welcher Leser Speicher für das Abspeichern der Kodes aufweist,
- Lesen der Kodes von gewünschten Parametern auf dem Support mit demselben Leser und Abspeichern dieser Kodes in den Speichern des Lesers,

  Lesen und Verarbeiten des Inhalts der Speicher des Lesers durch eine Verarbeitungseinheit (5), die fähig ist, Steuersignale in Funktion des Inhalts der Speicher zu erzeugen, und

- Transformieren der von der Verarbeitungseinheit erzeugten Steuersignale in Informationen mit Permanentspeicherung (12) des Typs Papierausdruck,

DADURCH GEKENNZEICHNET, daß die Kodifizierung der Parameter mindestens eine Kodifizierung (20) umfaßt, die das Leeren des Inhalts der Speicher des Kodelesers ermöglicht.

2. Verfahren nach Anspruch 1, DADURCH GEKENNZEICHNET, daß die Kodifizierung der Parameter mindestens eine der folgenden Funktionen umfaßt: Übertragung (21) der von dem Leser gelesenen Informationen, Erarbeiten von Informationen, die repräsentativ sind für die Werte (22, 32), die Daten (23), die Rechnungsabfolge (24), die Finanzvorträge (25), die Vorträgelöschungen (26), die Referenzzahlen (27-29), die Bestellerqualität (29), die Zahlungsweisen (30), die Bestellungen (31, 34), die Mengen (35), die Preise (36), Erzeugnisverfallsdaten (37), Erzeugnisinformationen (38) und Fragen bezüglich Wechselwirkungen (39) zwischen den Erzeugnissen.

fig.1

COTE RECTO

GESTION DE L'OFFICINE

0            Vidage Memoire (deux lectures)

‖‖‖‖‖‖‖        ‖‖‖‖‖‖‖‖‖‖‖ ～ **20**

1            Date d'ordonnance

‖‖‖‖‖‖‖        ‖‖‖‖‖‖ ～**23**

2            Facturation

‖‖‖‖‖‖‖        ‖‖‖‖‖‖ ～**24**

3            Avoir produit

‖‖‖‖‖‖‖        ‖‖‖‖‖‖ ～**25**

4            Annulation avoir produit

‖‖‖‖‖‖‖        ‖‖‖‖‖‖ ～**26**

5            Code S.S.

‖‖‖‖‖‖‖        ‖‖‖‖‖‖ ～**27**

6            Code Medecin

‖‖‖‖‖‖‖        ‖‖‖‖‖‖ ～**28**

7            Code Client

‖‖‖‖‖‖‖        ‖‖‖‖‖‖ ～**29**

8            Reglement

‖‖‖‖‖‖‖        ‖‖‖‖‖‖ ～**30**

1 = Cheque     2 = Carte de credit
3 = CCP        4 = paiement differe

9            Commande

‖‖‖‖‖‖‖        ‖‖‖‖‖‖ ～ **31**

Transmission

**22**        ‖‖‖‖‖‖‖‖‖‖‖ ～**21**

**3**

# fig.2

COTE VERSO

GESTION DE L'OFFICINE

| | |
|---|---|
| 00 | Vidage Memoire (deux lectures) |
| ‖‖‖‖‖‖‖‖ | ‖‖‖‖‖‖‖‖‖ 〜20 |
| 0 | Inventaire |
| ‖‖‖‖‖‖ | ‖‖‖‖‖‖ 〜33 |
| 1 | Commande |
| ‖‖‖‖‖‖ | ‖‖‖‖‖‖ 〜34 |
| 2 | Quantite |
| ‖‖‖‖‖ | ‖‖‖‖‖ 〜35 |
| 3 | Prix |
| ‖‖‖‖‖ | ‖‖‖‖‖ 〜36 |
| 4 | Date de peremption |
| ‖‖‖‖‖ | ‖‖‖‖‖ 〜37 |
| 5 | Information produit |
| ‖‖‖‖‖ | ‖‖‖‖‖ 〜38 |
| 6 | Interaction medicamenteuse |
| ‖‖‖‖‖ | ‖‖‖‖‖ 〜39 |
| 7 | transmission |
| ‖‖‖‖‖ | ‖‖‖‖‖‖‖‖ 〜21 |
| 8 | |
| ‖‖‖‖‖ | |
| 9 | |
| ‖‖‖‖‖ | |

↑32

〜3

# fig. 3